# DEMANDE DE BREVET EUROPEEN

(11) **EP 4 755 497 A1**
(43) Date de publication de la demande: **10.06.2026**
(21) Numéro de dépôt: 25220561.2
(22) Date de dépôt: 03.12.2025
(51) Int. Cl.: B01D 61/02, B01D 61/10, B01D 65/00, B01D 65/08, C02F 1/44, F16K 31/06, F16K 17/22

(54) **DISPOSITIF ET PROCEDE D'OSMOSE INVERSEE DE L'EAU, ET MAINTENANCE**

(30) Priorité: 06.12.2024 FR 2413548
(71) Demandeur: Clark, Alexander E. P., 06530 Speracedes (FR)
(72) Inventeur: Clark, Alexander E. P., 06530 Speracedes (FR)
(74) Mandataire: Axe PI

(57) **Abrégé**

La présente invention concerne un dispositif (1) d'osmose inversée de l'eau, comprenant un circuit alimenté depuis une entrée (2) jusqu'à une sortie (3) située au niveau d'une portion aval dudit circuit, une zone (4) de mise sous pression reliée à ladite entrée (2), une zone (6) de filtration reliée en aval pourvue d'au moins deux membranes (60) semi-perméables, délivrant de l'eau filtrée, et reliée en aval de ladite zone (6) de filtration, une sortie (9) d'évacuation d'eau non filtrée, avec une vanne d'évacuation (9à) avec une paroi ajourée par usinage d'au moins un orifice (94) traversant, de manière à, en position de fermeture de ladite vanne (90) d'évacuation, d'une part, assurer en permanence la circulation d'eau au travers de ladite sortie (9) d'évacuation, et d'autre part, maintenir une pression minimale au sein dudit circuit.

L'invention concerne aussi un procédé d'osmose inversée correspondant.

## Description

### DOMAINE TECHNIQUE DE L'INVENTION

La présente invention entre dans le domaine du traitement de fluide et la purification d'eau par filtrage, en particulier par osmose inversée.

De manière connue, l'osmose consiste à filtrer une solution diluée, dite hypotonique, au travers d'au moins une membrane semi-perméable, en vue d'obtenir une solution concentrée, dite hypertonique. Dans le cas de la filtration de l'eau, provenant d'un réseau d'approvisionnement, l'osmose inversée permet d'obtenir en aval de la membrane une eau purifiée, dite « eau osmosée », avec une concentration extrêmement faible de particules résiduelles.

On notera qu'une telle concentration des particules est exprimée en « ppm » pour « partie par million » ; 1 ppm équivaut à une particule parmi un million. Au sens de l'invention, l'unité de mesure « ppm » s'entend de façon générique et englobe aussi la fraction volumique, à savoir « partie par million par volume » (ppmv).

Usuellement, le recours à l'osmose inversée de l'eau est utile pour de nombreuses applications industrielles et professionnelles, ainsi que pour des applications domestiques. En particulier, du fait de sa très faible teneur en particules résiduelles, surtout en molécules calcaires, l'eau osmosée est souvent utilisée pour le nettoyage et le rinçage des carrosseries de véhicules de transport et dans le domaine automobile, des superstructures et des coques d'embarcations dans le domaine maritime, mais aussi des parois vitrées et des structures métalliques et peintes dans le domaine du bâtiment, ou encore des panneaux de conversion de l'énergie solaire, comme les panneaux photovoltaïques.

### ETAT DE LA TECHNIQUE

Actuellement, l'osmose inversée de l'eau s'effectue par un dispositif dédié avec un circuit alimenté en eau au niveau d'une entrée, par exemple depuis un réseau d'approvisionnement en eau de type domestique ou industriel. La mise en circulation de l'eau s'effectue sous la pression dudit réseau en amont jusqu'à des moyens de mise sous pression, sous la forme d'une ou plusieurs pompes, délivrant une pression réglable vers l'aval.

De plus, l'eau sous pression traverse successivement plusieurs zones de filtration jusqu'à une sortie, délivrant de l'eau osmosée. Une zone principale de filtration comprend une ou plusieurs membranes semi-perméables, montées en série ou en parallèle. Le passage au travers de chaque membrane permet de filtrer l'eau de ses particules. L'eau filtrée est alors envoyée vers une portion aval dudit circuit, jusqu'à ladite sortie, où l'eau filtrée peut être utilisée.

Le circuit peut aussi comprendre une zone de préfiltration au niveau de l'entrée équipée de moyens de filtration adaptés, par exemple avec des compositions à base de sels, de charbon actif ou sédiments. Chaque type de ces compositions permettent de filtrer des particules spécifiques, comme par exemple des impuretés ou des ions.

Le circuit comprend encore une zone de rejet avec une sortie d'évacuation de la solution hypertonique chargée en particules. Cette sortie d'évacuation, habituellement fermée lors de la filtration, est ouverte lors de l'entretien des membranes, afin de purger l'eau non filtrée, lorsque sa concentration en particules devient trop élevée.

Pour ce faire, le circuit est shunté, fermant la portion aval dudit circuit et redirigeant le flux d'eau vers ladite sortie d'évacuation.

En outre, le circuit peut être équipé de différents organes hydraulique à différents emplacements spécifiques, comme des électrovannes et vannes, notamment avec un clapet anti-retour, un manomètre ou encore un pressostat.

Une problématique des dispositifs d'osmose inversée connus réside dans la maintenance et l'entretien des membranes de la zone de filtration. En effet, au fil de la filtration, les pores conférant le caractère semi-perméable aux membranes s'obstruent, notamment par dépose de tarte. Il est alors nécessaire de faire circuler une solution de lavage, voire de procéder au remplacement desdites membranes. Cette maintenance est fastidieuse et coûteuse en temps.

Une solution connue consiste à assurer une évacuation constante réalisée au niveau d'une vanne d'évacuation positionnée au niveau de la sortie d'évacuation usuellement utilisée pour décharger le circuit de sa solution non filtrée et chargée en particules.

Le document KR 2021 0079506 décrit une vanne de type électrovanne située en au niveau d'un circuit de vidange d'un dispositif d'osmose inversée de l'eau. Cette vanne prévoit une circulation constante d'eau au moyen d'un premier micro-canal monté sur un premier organe d'entrée et un deuxième micro-canal monté sur un deuxième organe de sortie, assurant un écoulement constant d'eaux usées. De plus, chaque micro-canal se présente sous la forme d'un tube qui est rapporté en fixation sur l'organe correspondant, qui est conçu et fabriqué spécifiquement pour le recevoir, en particulier lors du moulage de chaque organe lors de la fabrication des éléments de ladite vanne.

En outre, l'intérieur du corps d'une telle vanne doit être spécifiquement configuré par rapport à chaque organe, pour permettre la mobilité de chaque organe équipé de son micro-canal, par l'intermédiaire d'un volume interne correspondant qui autorise un tel mouvement.

### EXPOSE DE L'INVENTION

L'invention a pour but de pallier les inconvénients de l'état de la technique en proposant un dispositif d'osmose inversée de l'eau qui prévoit d'évacuer en permanence une partie de l'eau chargée en particule avant filtration par les membranes, ce qui permet de limiter l'obstruction de leurs pores et espacer les opérations de maintenance, augmentant aussi la durée de vie des membranes de filtration et espaçant d'autant dans le temps leur remplacement.

De surcroît, avec une partie de la solution hypertonique constamment évacuée, en ajoutant une filtration résiduelle à résine à échange d'ions avant la sortie, l'eau filtrée présente alors une teneur moindre en particules, constatée inférieure à 1 ppm.

De plus, l'invention permet, préférentiellement avec une unique opération, de transformer une vanne existante pour assurer cette fonction d'évacuation permanente de la solution hypertonique, sans ajouter ou remplacer d'élément de cette vanne.

Pour ce faire, l'invention prévoit d'ajourer un bord interne d'une vanne d'évacuation située au niveau de la sortie d'évacuation d'eau non filtrée, par usinage d'un ou plusieurs orifices, de préférence un seul et unique orifice, chaque orifice étant directement prévu traversant de part et d'autre entre l'entrée et la sortie de ladite vanne d'évacuation, au niveau de l'organe mobile ou bien du corps de ladite vanne, permettant de s'adapter à tout type et tout modèle de vanne.

Selon un premier aspect de l'invention, le dispositif d'osmose inversée de l'eau comprend
- un circuit s'étendant depuis au moins une entrée jusqu'à au moins une sortie située au niveau d'une portion aval dudit circuit,
   ledit circuit étant alimenté en entrée par une source d'approvisionnement en eau à filtrer ;
      et
   le long dudit circuit :
      - une zone de mise sous pression reliée à ladite entrée au travers d'une portion amont dudit circuit ;
      - une zone de filtration reliée en aval à ladite zone de mise sous pression, ladite zone de filtration étant pourvue d'au moins deux membranes semi-perméables, délivrant de l'eau filtrée vers la portion aval dudit circuit ;
      - reliée en aval de ladite zone de filtration, une sortie d'évacuation d'eau non filtrée, équipée d'une vanne d'évacuation,
   ladite vanne d'évacuation comprenant un corps au sein duquel un canal de circulation relie l'amont et l'aval de ladite vanne et étant équipée d'un organe prévu mobile entre une position d'ouverture et une position de fermeture en obturation dudit canal de circulation et de la sortie d'évacuation ;
- ladite vanne d'évacuation comprenant une paroi ajourée, de manière à, en position de fermeture de ladite vanne d'évacuation, d'une part, assurer en permanence la circulation d'eau le long dudit canal et au travers de ladite sortie d'évacuation, et d'autre part, maintenir une pression minimale au sein dudit circuit.

Avantageusement, un tel dispositif d'osmose inversée se caractérise en ce que
- ladite paroi ajourée est un bord interne dudit corps situé entre l'amont et l'aval de part et d'autre dudit organe, ledit bord interne étant perforé d'au moins un orifice traversant ;
   et en ce que
- ledit au moins un orifice se présente sous forme d'un usinage à section circulaire ; le nombre et le dimensionnement dudit au moins un orifice, ainsi que sa répartition sur la paroi ajourée, dépendant de la pression à maintenir au sein du circuit, ainsi que des caractéristiques de ladite vanne ;
   le dimensionnement dudit au moins un orifice dépendant aussi du nombre de membranes de la zone de filtration.

Selon des caractéristiques additionnelles, non limitatives :
- ledit bord (95) interne est perforé d'un unique orifice (94)
   ou
- d'une pluralité d'orifices (94).

Selon un mode de réalisation, ladite vanne d'évacuation est une vanne de type électrovanne, avec ledit organe formé par un piston monté coulissant à l'intérieur du corps entre les positions d'ouverture et de fermeture.

Selon un mode de réalisation, chaque orifice présente un diamètre compris entre 1,2 et 3,5 millimètres.

Selon un mode de réalisation, ladite zone de filtration comprend deux membranes montées en série et chaque orifice présente un diamètre de 1,2 millimètres.

Selon un mode de réalisation, ladite zone de filtration comprend trois membranes montées en série et chaque orifice présente un diamètre de 1,5 millimètres.

Selon un mode de réalisation, ledit dispositif d'osmose inversée comprend le long de la portion aval, avant ladite sortie, des moyens de filtration résiduelle à base de résine ionique.

Selon un deuxième aspect, l'invention concerne un procédé d'osmose inversée de l'eau.

Un tel procédé d'osmose inversée est prévu pour la mise en œuvre du dispositif d'osmose inversée selon l'invention.

En particulier, le procédé d'osmose inversée de l'eau, comprend au moins les étapes suivantes :
- on alimente en eau à filtrer un circuit au niveau d'un entrée ;
- on effectue une mise sous pression de l'eau au sein dudit circuit ;
- on effectue une filtration de l'eau sous pression par passage au travers d'au moins deux membranes semi-perméables ;
- l'eau filtrée est mise en circulation le long d'une portion aval dudit circuit jusqu'à une sortie ;
caractérisé en ce que
- on évacue une quantité d'eau à filtrer en permanence au cours de la filtration.

Selon un mode de réalisation, non limitative, ledit procédé d'osmose inversée se caractérise en ce que
- on évacue ladite quantité d'eau au travers d'une sortie d'évacuation équipée d'une vanne en position de fermeture en obturation de ladite sortie d'évacuation, ladite vanne étant équipée d'une paroi ajourée entre l'amont et l'aval ;
   et en ce que
- ladite paroi est ajourée de façon spécifique, en fonction au moins de la pression au sein dudit circuit et/ou du nombre desdites au moins deux membranes.

### PRESENTATION DES DESSINS

D'autres caractéristiques et avantages de l'invention ressortiront de la description détaillée qui va suivre des modes de réalisation non limitatifs de l'invention, en référence aux figures annexées, dans lesquelles :
[Fig. 1] représente schématiquement une vue de l'architecture d'un mode de réalisation du dispositif d'osmose inversée équipé de deux membranes de filtration, montrant notamment la circulation de l'eau le long du circuit ;
[Fig. 2] représente schématiquement une vue en coupe transversale d'un mode de réalisation d'une vanne équipant le dispositif d'osmose inversée, avec un canal de circulation entre une entrée et une sortie obturée par un organe mobile sous forme d'une membrane d'obturation, en position de fermeture, montrant notamment un corps de vanne perforé de plusieurs orifices traversants reliant l'entrée et la sortie ;
[Fig. 3] représente schématiquement une vue similaire à la figure 2, avec la membrane en position d'ouverture, assurant la circulation le long dudit canal ;
[Fig. 4] représente schématiquement une vue en coupe transversale d'un mode de réalisation d'une vanne équipant le dispositif d'osmose inversée, en position de fermeture de la membrane, avec un corps de vanne perforé d'un unique orifice traversant reliant l'entrée et la sortie ;
[Fig. 5] représente schématiquement une vue similaire à la figure 4, en position d'ouverture de ladite membrane, assurant la circulation le long dudit canal ; et

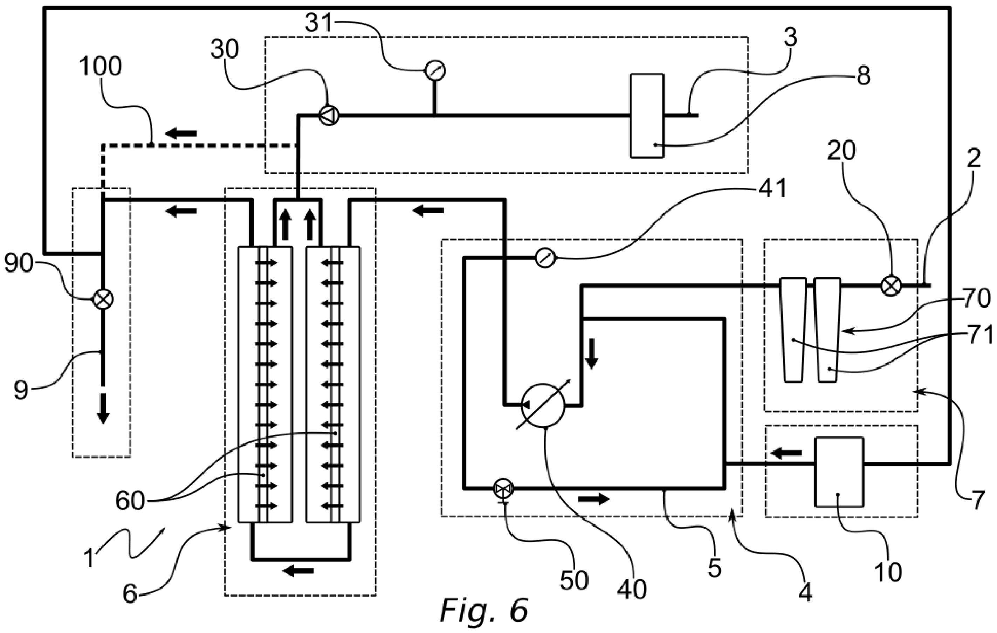

[Fig. 6] représente schématiquement une vue de l'architecture d'un mode de réalisation du dispositif d'osmose inversée équipé d'un réservoir de solution de lavage lors de la maintenance dudit dispositif et le nettoyage des membranes, montrant notamment la circulation de cette solution de lavage le long du circuit.

### DESCRIPTION DETAILLEE

Selon un premier aspect, l'invention concerne un dispositif 1 d'osmose inversée, ou « dispositif 1 », destinée à assurer la filtration de l'eau par un procédé d'osmose inversée.

Pour ce faire, le dispositif 1 comprend tout d'abord un circuit s'étendant depuis au moins une entrée 2 jusqu'à au moins une sortie 3 située au niveau d'une portion aval dudit circuit.

En outre, ledit circuit est alimenté en entrée par une source d'approvisionnement en eau à filtrer, à savoir un réseau d'approvisionnement de type domestique ou industriel. La mise en circulation de l'eau le long du circuit, en particulier le long d'une portion amont depuis l'entrée 2, s'effectue donc au moins en partie sous la pression dudit réseau d'approvisionnement.

On notera que le circuit peut être équipé d'un organe hydraulique au niveau de l'entrée 2, limitant le retour vers ledit approvisionnement. Un tel organe peut notamment être une électrovanne 20 d'entrée. Cette électrovanne 20 d'entrée est contrôlée en ouverture lors de la mise en fonctionnement du dispositif 1 et lors de son utilisation, et qui est fermée en attente d'utilisation ou lors de l'arrêt dudit dispositif 1, coupant alors le circuit de l'approvisionnement en eau.

De plus, le dispositif 1 comprend le long dudit circuit une zone 4 de mise sous pression (ou encore zone 4) reliée à ladite entrée 3 au travers d'une portion amont dudit circuit. Une telle zone 4 permet d'augmenter la pression pour délivrer une pression augmenter vers la sortie 4 en fonction de l'application souhaitée, ainsi qu'en vue de la filtration réalisée en aval. Cette élévation de la pression vers l'aval du circuit permet aussi de maintenir une pression suffisante pour assurer une évacuation, comme il sera vu par la suite.

Selon un mode de réalisation, la zone 4 de mise sous pression peut comprend plusieurs types d'organes hydrauliques différents. En particulier, le long d'une portion principale du circuit depuis l'entrée 4, la zone 4 comprend au moins une pompe 40. Cette pompe 40 peut être de tout type, alimentée électriquement, afin d'augmenter la pression à aval du circuit. En particulier, la pompe 40 est adaptée pour fournir une pression comprise entre 180 psi et 210 psi, préférentiellement de l'ordre de 200 psi.

On notera que 1 psi (pour « pound per square inch ») équivaut à environ 6894,76 Pa (Pascal), ou encore environ 0,0689476 bar.

De plus, la zone 4 de mise sous pression peut comprendre un by-pass 5 sous la forme d'une dérivation reliant l'aval et l'amont de ladite pompe 40. Un tel by-pass 5 permet une recirculation de l'eau, en particulier en cas de blocage en aval, surtout lors de la mise en service et de l'utilisation du dispositif 1, servant de sécurité contre une éventuellement surpression au sein du circuit, limitant aussi les risques de coup de bélier.

Plus avant, ledit by-pass 5 peut comprendre une vanne à étranglement prévue réglable, notamment de type robinet 50 à étranglement. Ce robinet50 permet de réguler la pression, préférentiellement de façon manuelle, jusqu'à atteindre une pression seuil minimale pour la filtration en aval, ainsi que l'application en sortie 3.

En outre, la zone 4 de filtration peut aussi comprendre un organe hydraulique de mesure de la pression, relié au circuit en aval de ladite pompe 40. En particulier, la zone 4 comprend un manomètre 41 situé en aval de la pompe 40.

Une fois la surpression réalisée au travers de la zone 4, le dispositif 1 prévoit une filtration et comprend, à cet effet, une zone 6 de filtration reliée en aval à ladite zone 4 de mise sous pression.

Ladite zone 6 de filtration est pourvue d'au moins deux membranes 60 semi-perméables, délivrant de l'eau filtrée vers la portion aval dudit circuit.

Selon un mode de réalisation, la zone 6 de filtration est pourvue de trois membranes 60.

On notera que les membranes 60 peuvent être montées en parallèle, mais préférentiellement en série l'eau circulation successivement au travers de chacune des membranes 60.

Plus avant, les membranes 60 peuvent être de tout type, préférentiellement des membranes dites « à basse pression », assurant une filtration à partir d'une pression d'au moins 10 à 20 psi, mais aussi jusqu'à des hautes pressions de l'ordre de 500 à 600 psi, ou supérieures, permettant d'obtenir une filtration adaptée pour une consommation moindre en énergie (i.e. de la pompe 40).

Les membranes 60 peuvent être en tout type de matériau avec une perméabilité adaptée, en particulier sous forme d'un film composite, notamment en polyamide, préférentiellement en polyamide aromatique.

Afin d'améliorer la filtration, selon un mode de réalisation, entre l'entrée 3 et la zone de mise 4 sous pression, une zone 7 de préfiltration, équipée de moyens 70 de préfiltration au moins à base de charbon actif.

Préférentiellement, les moyens 70 de préfiltration comprennent plusieurs filtres 71 successifs, à base de charbon actif, à base de sédiments et/ou sous forme de résines d'ions. De tels filtres 71 assurent une préfiltration de particules de différentes dimensions, de préférence supérieures à 5 microns (ou micromètre équivalent à 1 millionième de mètre). De tels filtres 71 peuvent aussi assurer la filtration de particules spécifiques, notamment organiques, comme des bactéries, ou encore de certains composés chimiques, comme les composés à base de chlore ou certains sels minéraux. Ces filtres 71 peuvent alors servir d'adoucisseur ou pour la désalinisation de l'eau en entrée 2.

En outre, ladite électrovanne 20 d'entrée est située au niveau de ladite zone 7 de préfiltration en amont des moyens 70 de préfiltration.

Selon un mode de réalisation, le dispositif 1 d'osmose inversée comprend le long de la portion aval du circuit, avant ladite sortie 3, des moyens 8 de filtration résiduelle. Ces moyens 8 de filtration résiduelle peuvent être de tout type, préférentiellement à base de résine ionique. Après filtration par les membranes 60, les moyens 8 de filtration résiduelle permettent d'obtenir une eau avec une concentration inférieure à 1 ppm. Cette filtration résiduelle permet donc d'obtenir une filtration finale en sortie 3 passant de 95% à 100% de particules, évitant tout résidu, même minime.

On notera que le circuit peut comprendre d'autres organes hydrauliques pour contrôler la circulation au sein du circuit, en particulier vers la sortie 3.

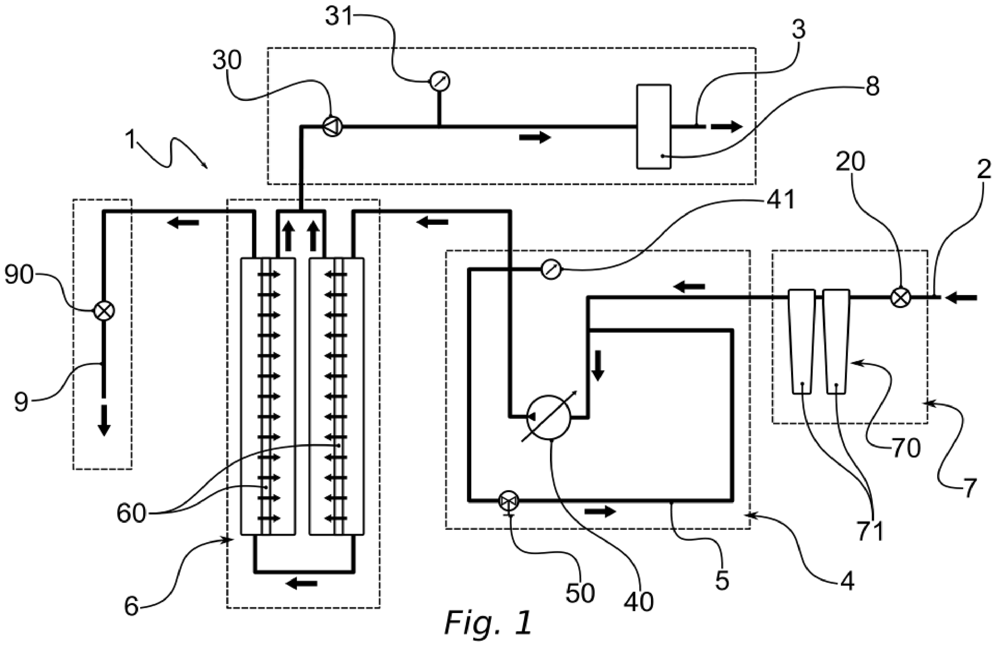

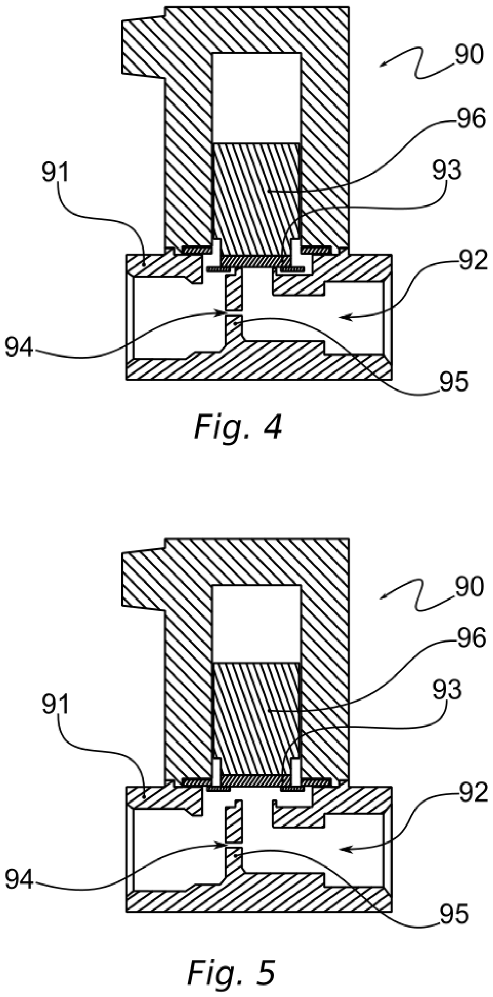

Par exemple, comme visible sur les figures 1 et 4, un clapet 30 anti-retour peut être positionné avec la sortie 3, de préférence avant les moyens 8 de filtration résiduelle, empêchant un retour vers les membranes 60 de la zone 6 de filtration.

Par exemple, un pressostat 31 peut être monté entre la zone 6 de filtration et la sortie 3, de préférence entre le clapet 30 anti-retour et les moyens 8 de filtration. Un tel pressostat 31 contrôle et régule la pression au sein de cette partie du circuit, assurant une pression adaptée en fonction de l'application et de l'utilisation du dispositif 1. Ce pressostat 31 peut être relié à la pompe 40, notamment au travers de moyens de contrôle adaptés, afin de commander sa mise en fonctionnement ou son arrêt, voire son niveau de fonctionnement, en fonction de la pression mesurée avant la sortie 3 du circuit. Ce pressostat 31 permet tout particulièrement de réguler les fluctuations de pression provenant de l'évacuation permanente, comme il sera vu par la suite.

Plus avant, le dispositif 1 comprend, reliée en aval de ladite zone 6 de filtration, une sortie 9 d'évacuation d'eau non filtrée. Une telle sortie 9 d'évacuation permet de purger le circuit, en particulier des solutions chargées en particules obtenues en amont des membranes 60.

Avantageusement, l'invention prévoit une évacuation permanente, en cours de fonctionnement du dispositif 1. En d'autres termes, au cours de la filtration au travers des membranes 60, une quantité d'eau chargée en particules est constamment évacuée au niveau de ladite sortie 9 d'évacuation.

Pour ce faire, la sortie 9 d'évacuation d'eau non filtrée est équipée d'une vanne 90 d'évacuation spécifique. Une telle vanne 90 d'évacuation comprend un corps 91 au sein duquel un canal 92 de circulation relie l'amont et l'aval de ladite vanne 90. De plus, la vanne 90 est équipée d'un organe 93 prévu mobile entre une position d'ouverture et une position de fermeture en obturation dudit canal 92 de circulation et de la sortie 9 d'évacuation.

Tout particulièrement, ladite vanne 90 d'évacuation comprend une paroi ajourée, de manière à, en position de fermeture de ladite vanne 90 d'évacuation, d'une part, assurer en permanence la circulation d'eau le long dudit canal 92 et au travers de ladite sortie 9 d'évacuation, et d'autre part, maintenir une pression minimale au sein dudit circuit. En d'autres termes, en position de fermeture de la vanne 90, sous l'effet de la pression au sein du circuit, une paroi ajourée de la vanne 90 d'évacuation laisse traverser une quantité d'eau depuis l'amont vers la sortie 9 d'évacuation. En somme, la vanne 90 d'évacuation est percée.

Avantageusement, ladite paroi ajourée est un bord 95 interne dudit corps 91 situé entre l'amont et l'aval de part et d'autre dudit organe 93, ledit bord interne étant perforé d'au moins un orifice 94 traversant.

Préférentiellement, le bord 95 interne est pourvu d'un seul et unique orifice 94.

Selon un mode de réalisation alternatif, le bord 95 interne est pourvu de plusieurs orifices 94.

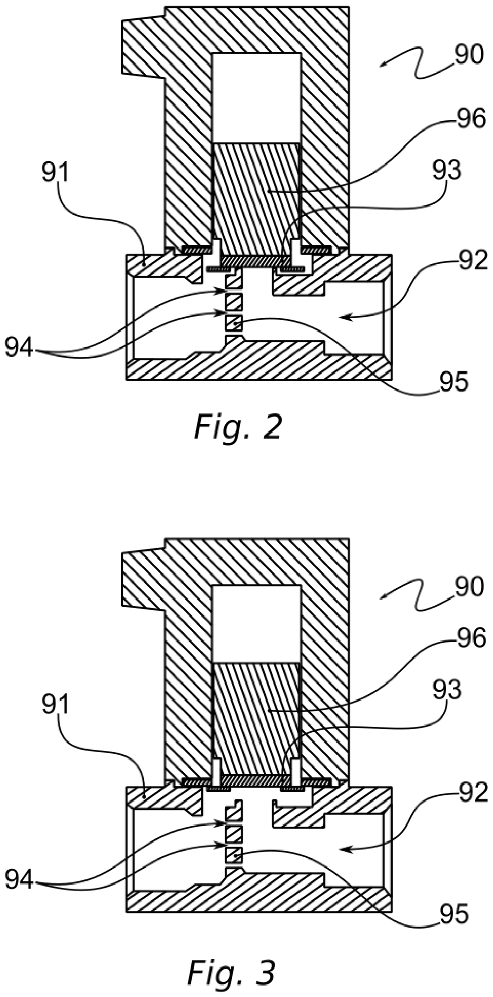

Les figures 3 et 4 montrent un exemple de réalisation d'une vanne 90 avec un corps 91 pourvu d'un bord 95 interne au travers duquel sont ménagés le ou les orifices 94 prévus traversants entre l'un et l'autre des côtés dudit bord 95 interne.

Selon un mode de réalisation, ladite vanne 90 est une vanne de type électrovanne, avec ledit organe 93 formé par un piston 96 monté coulissant à l'intérieur du corps 91 de vanne entre les positions d'ouverture et de fermeture. La figure 2 montre le piston 96 en position de fermeture, en obturation du canal 92 de circulation, alors que la figure 3 montre le piston 96 en position d'ouverture du canal 92 de circulation.

Plus avant, chacun des orifices 94 peut présenter un diamètre compris entre 1,2 et 3,5 millimètres (1 mm = 1 millième de mètre). Un tel dimensionnement permet de laisser passer une quantité déterminée de particules de tailles conséquentes, qui ne passent pas à travers les membranes. En particulier, il a été constaté qu'un ou des orifices 94 de dimensions inférieures à 1,2 mm, l'évacuation permanente entraîne en encrassement des membranes 60, tandis que pour des dimensions supérieures à 3,5 mm, la pression au sein du circuit baisse drastiquement, limitant l'utilisation souhaitée et surchargeant la pompe.

Par ailleurs, le ou les orifices 94 peuvent être de toute forme et de tout type, sous forme d'un usinage à section circulaire, à savoir des trous ronds, réalisé traversants le matériau de ladite paroi afin de la rendre ajourée. En d'autres termes, chaque orifice 94 est réalisé par perforation du corps lors d'une opération d'usinage, s'adaptant à tout type ou tout format de vanne, en usinant l'élément accessible et correspondant pour assurer une jonction de circulation entre l'entrée et la sortie. En somme, chaque orifice 94 forme un trou ou un canal entre l'amont et l'aval de la vanne 90 d'évacuation.

En outre, le nombre et le dimensionnement du ou des orifices 94, ainsi que leur répartition sur la paroi ajourée, à savoir l'organe 93 ou le bord 95 interne dépendant de la pression à maintenir au sein du circuit, ainsi que des caractéristiques de ladite vanne 90, notamment de son organe 93 ou de son bord 95 interne.

Le dimensionnement du ou des orifices 94 dépend aussi du nombre de membranes 60 de la zone 6 de filtration.

Ainsi, selon un mode de réalisation, ladite zone 6 de filtration comprend deux membranes 60 montées en série. Dès lors, chaque orifice 94 présente un diamètre de 1,2 millimètres.

Selon un autre mode de réalisation, ladite zone 6 de filtration comprend trois membranes 60 montées en série. Dès lors, chaque orifice 94 présente un diamètre de 1,5 millimètres.

Selon un deuxième aspect, l'invention concerne un procédé d'osmose inversée de l'eau.

Un tel procédé peut être particulièrement prévu pour la mise en œuvre du dispositif 1 d'osmose inversée, tel que précédemment décrit.

Le procédé d'osmose inversée comprend au moins les étapes suivantes.

Tout d'abord, on alimente en eau à filtrer un circuit au niveau d'un entrée 2. Cette alimentation s'effectue notamment par un réseau d'approvisionnement, tel que susmentionné.

L'eau alimentée est mise sous pression au sein dudit circuit. Une telle mise sous pression peut s'effectuer au travers de la zone 4 de mise sous pression, telle que susmentionnée.

De plus, on effectue une filtration de l'eau sous pression par passage au travers d'au moins deux membranes 60 semi-perméables.

Après filtration, l'eau filtrée est mise en circulation le long d'une portion aval dudit circuit jusqu'à une sortie 3.

D'autres filtrations peuvent être envisagées, comme une préfiltration en entrée 2 et/ou une filtration résiduelle en sortie 3, comme susmentionné.

Avantageusement, le procédé d'osmose inversée prévoit qu'on évacue une quantité d'eau à filtrer en permanence au cours de la filtration. En d'autres termes, l'eau chargée de particules est évacuée constamment au cours du fonctionnement, diminuant l'agrégation de particules au sein des membranes 60 et limitant leur encrassement, ce qui préserve une qualité de filtration en cours d'utilisation.

Selon un mode de réalisation, on évacue ladite quantité d'eau au travers d'une sortie 9 d'évacuation équipée d'une vanne 90 en position de fermeture en obturation de ladite sortie 9 d'évacuation. Pour ce faire, ladite vanne 90 est équipée d'une paroi ajourée entre l'amont et l'aval.

De plus, ladite paroi est ajourée de façon spécifique, en fonction au moins de la pression au sein dudit circuit et/ou du nombre desdites au moins deux membranes 60.

En particulier, comme évoqué précédemment, la paroi est ajourée au moyen d'un ou plusieurs orifices 94 traversants avec un dimensionnement spécifique, tel que susmentionné.

Selon un mode de réalisation subsidiaire, au cours du procédé d'osmose inversée, l'eau entrée 2 du circuit peut être réchauffée, de manière à améliorer la filtration. En effet, avec une eau chaude, de l'ordre de 25 à 35°C (degrés Celsius), les matériaux des membranes 60 semi-perméables se dilatent, améliorant le transfert d'eau tout en réduisant le transfert de particules, tout en limitant l'encrassement desdites membranes 60.

En outre, dans le mode de réalisation correspondant, le dispositif 1 d'osmose inversée est alors équipé, en entrée 2, de moyen de préchauffage, par exemple sous forme d'un chauffe-eau instantané, notamment de type électrique.

En particulier, des moyens de mesure de la température en aval peuvent être implantés le long du circuit, afin de vérifier le chauffage à une température de consigne définie et réglable. Ces moyens de mesure peuvent notamment commander une circulation fermée via le by-pass 5, jusqu'à atteindre ladite température de consigne et l'ouverture du circuit pour rediriger l'eau chauffée vers la filtration.

Selon un autre aspect connexe, l'invention concerne aussi un procédé de maintenance d'un dispositif 1 d'osmose inversée de l'eau selon le premier aspect.

Un tel procédé de maintenance prévoit qu'on effectue un nettoyage des membranes 60 par mise en circulation le long dudit circuit d'une solution aqueuse de lavage à base de vinaigre, de préférence avec une concentration d'environ 20 à 30% de vinaigre, notamment de 30% de vinaigre à plus ou moins 5% près.

En outre, lors de la maintenance, la vanne 9 d'évacuation peut être contrôlée en ouverture, afin de purger le circuit.

En particulier, comme visible sur la figure 4, ledit circuit peut alors être équipé d'un réservoir 10 relié audit circuit et contenant ladite solution de lavage. Un tel réservoir 10 est relié en aval de l'entrée 2, de préférence en aval de la zone 7 de préfiltration, notamment au niveau du by-pass 5 de la zone 4 de mise sous pression.

En outre, un tel lavage peut être effectué à basse pression, assurant que la solution de lavage est redirigée vers la sortie 9 d'évacuation, ne traversant pas les moyens 8 de filtration résiduelle, du fait de la présente du clapet 30 anti-retour et du pressostat 31.

Par ailleurs, une dérivation sous forme de shunt 100 peut être placée le long du circuit, après la sortie de la zone 6 de filtration et des membranes 60 et avant ledit clapet 30 anti-retour, renvoyant le flux vers la sortie 9 d'évacuation.

En outre, ladite sortie 9 d'évacuation peut être reliée audit réservoir 10, afin de mettre en circulation ladite solution de lavage. En somme, le nettoyage s'effectue en circuit fermé.

En outre, il est possible de laisser tremper le circuit, en mettant en circulation la solution de lavage pendant une durée donnée, notamment de l'ordre de plusieurs dizaines de minutes, par exemple de 15 à 20 minutes, puis en coupant la mise en circulation pendant une durée déterminée, notamment de plusieurs heures, par exemple de l'ordre de 8 à 10 heures.

Ensuite, on déconnecte le réservoir 10, puis on effectue un rinçage du circuit, pendant une durée déterminée, notamment quelques minutes ou dizaines de minutes.

Ainsi, la solution de lavage permet d'assurer une maintenance régulière, allongeant la durée de vie des membranes 60, ainsi que des autres composants du circuit.

## Revendications

1. Dispositif (1) d'osmose inversée de l'eau, comprenant
- un circuit s'étendant depuis au moins une entrée (2) jusqu'à au moins une sortie (3) située au niveau d'une portion aval dudit circuit,
ledit circuit étant alimenté en entrée (2) par une source d'approvisionnement en eau à filtrer ;
et
le long dudit circuit :
- une zone (4) de mise sous pression reliée à ladite entrée (2) au travers d'une portion amont dudit circuit ;
- une zone (6) de filtration reliée en aval à ladite zone (4) de mise sous pression, ladite zone (6) de filtration étant pourvue d'au moins deux membranes (60) semi-perméables, délivrant de l'eau filtrée vers la portion aval dudit circuit ;
- reliée en aval de ladite zone (6) de filtration, une sortie (9) d'évacuation d'eau non filtrée, équipée d'une vanne d'évacuation (90),
ladite vanne (90) d'évacuation comprenant un corps (91) au sein duquel un canal (92) de circulation relie l'amont et l'aval de ladite vanne (90) et étant équipée d'un organe (93) prévu mobile entre une position d'ouverture et une position de fermeture en obturation dudit canal (92) de circulation et de la sortie (9) d'évacuation ;
- ladite vanne (90) d'évacuation comprenant une paroi ajourée, de manière à, en position de fermeture de ladite vanne (90) d'évacuation, d'une part, assurer en permanence la circulation d'eau le long dudit canal (92) et au travers de ladite sortie (9) d'évacuation, et d'autre part, maintenir une pression minimale au sein dudit circuit ;
**caractérisé en ce que**
- ladite paroi ajourée est un bord (95) interne dudit corps (31) situé entre l'amont et l'aval de part et d'autre dudit organe (93), ledit bord (95) interne étant perforé d'au moins un orifice (94) traversant ;
et **en ce que**
- ledit au moins un orifice (94) se présente sous forme d'un usinage à section circulaire ;
le nombre et le dimensionnement dudit au moins un orifice (94), ainsi que sa répartition sur la paroi ajourée, dépendant de la pression à maintenir au sein du circuit, ainsi que des caractéristiques de ladite vanne 90 ;
le dimensionnement dudit au moins un orifice (94) dépendant aussi du nombre de membranes (60) de la zone (6) de filtration.

2. Dispositif (1) d'osmose inversée selon la revendication précédente, **caractérisé en ce que**
- ledit bord (95) interne est perforé d'un unique orifice (94)
ou
- d'une pluralité d'orifices (94).

3. Dispositif (1) d'osmose inversée selon l'une quelconque des revendications précédentes, **caractérisé en ce que**
- ladite vanne (90) d'évacuation est une vanne de type électrovanne, avec ledit organe (93) formé par un piston (96) monté coulissant à l'intérieur du corps (91) entre les positions d'ouverture et de fermeture.

4. Dispositif (1) d'osmose inversée selon l'une quelconque des revendications 2 à 3, **caractérisé en ce que**
- chaque orifice (94) présente un diamètre compris entre 1,2 et 3,5 millimètres.

5. Dispositif (1) d'osmose inversée selon l'une quelconque des revendications 2 à 4, **caractérisé en ce que**
- ladite zone (6) de filtration comprend deux membranes (60) montées en série ; et **en ce que**
- chaque orifice (94) présente un diamètre de 1,2 millimètres.

6. Dispositif (1) d'osmose inversée selon l'une quelconque des revendications 2 à 5, **caractérisé en ce que** :
- ladite zone (6) de filtration comprend trois membranes (60) montées en série ; et **en ce que**
- chaque orifice (94) présente un diamètre de 1,5 millimètres.

7. Dispositif (1) d'osmose inversée selon l'une quelconque des revendications précédentes, **caractérisé en ce qu'**il comprend :
- le long de la portion aval, avant ladite sortie (3), des moyens (8) de filtration résiduelle à base de résine ionique.

8. Procédé d'osmose inversée de l'eau pour la mise en œuvre d'un dispositif (1) d'osmose inversée de l'eau selon l'une quelconque des revendications précédentes, comprenant au moins les étapes suivantes :
- on alimente en eau à filtrer un circuit au niveau d'un entrée (2) ;
- on effectue une mise sous pression de l'eau au sein dudit circuit ;
- on effectue une filtration de l'eau sous pression par passage au travers d'au moins deux membranes (60) semi-perméables ;
- l'eau filtrée est mise en circulation le long d'une portion aval dudit circuit jusqu'à une sortie (3) ;
**caractérisé en ce que**
- on évacue une quantité d'eau à filtrer en permanence au cours de la filtration.

9. Procédé d'osmose inversée selon la revendication précédente, **caractérisé en ce que**
- on évacue ladite quantité d'eau au travers d'une sortie (9) d'évacuation équipée d'une vanne (90) en position de fermeture en obturation de ladite sortie (9) d'évacuation, ladite vanne (90) étant équipée d'une paroi ajourée entre l'amont et l'aval ;
et **en ce que**
- ladite paroi est ajourée de façon spécifique, en fonction au moins de la pression au sein dudit circuit et/ou du nombre desdites au moins deux membranes (60).
